# FASCICULE DE BREVET EUROPEEN

(11) **EP 1 231 122 B1**
(45) Date de publication et mention de la délivrance du brevet: **02.12.2009**
(21) Numéro de dépôt: 02290312.4
(22) Date de dépôt: 07.02.2002
(51) Int. Cl.: B60T 13/52, B60T 7/04

(54) **Servomoteur de freinage à position contrôlée**
Bremskraftverstärker mit gesteuerter Position
Brake booster with controlled position

(30) Priorité: 09.02.2001 FR 0101898
(43) Date de publication de la demande: 14.08.2002
(73) Titulaire: ROBERT BOSCH GMBH, 70442 Stuttgart (DE)
(72) Inventeur: Gendrin, Stéphane, 35170 Rennes (FR); Fourcade, Jean, 35890 Laille (FR); Lacroix, Stéphane, 77220 Tournan en Brie (FR)
(74) Mandataire: Hurwic, Aleksander Wiktor

(56) Documents cités:
- DE-A- 19 510 522
- US-A- 5 096 268
- US-A- 5 350 225

## Description

La présente invention a pour objet un servomoteur d'assistance de freinage dont la position d'une tige de commande est contrôlée, notamment un servomoteur pneumatique, un servomoteur pneumatique à assistance complémentaire électrique, voire un servomoteur purement électrique. Elle vise à améliorer le contrôle de la commande de freinage.

Un servomoteur pneumatique d'assistance de freinage comporte dans son principe une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source d'un fluide propulseur, typiquement de l'air sous pression atmosphérique. Au repos, c'est à dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

Pour de tels servomoteurs, différents besoins et procédés de contrôle sont connus. D'une part, il est connu de mesurer les pressions dans les chambres arrières et chambres avant pour connaître leur état de dépression et éventuellement les problèmes de vieillissement et de fuite pneumatique qu'ils peuvent rencontrer. Ces différentes mesures de pression peuvent par ailleurs être utilisées lors de la mise en oeuvre d'une assistance de freinage électrique complémentaire, une pompe électrique injectant un fluide hydraulique dans le circuit hydraulique de freinage, en complément de l'effort appliqué par le maître cylindre, lorsque l'assistance pneumatique arrive en saturation.

Par ailleurs, notamment en cas de freinage brusque, il est prévu divers dispositifs, souvent mécaniques, pour mesurer la rapidité d'enfoncement de la tige de commande de freinage. Si cet enfoncement est rapide, l'assistance de freinage peut alors être assortie, à titre de perfectionnement, d'une faculté de maintien du freinage malgré un relâchement de la pression du pied du conducteur sur la pédale de frein. On sait que de tels modes sont de nature à éviter de nombreux accidents. Dans un véhicule perfectionné, plutôt que de mesurer la rapidité d'enfoncement de la tige de commande de frein par un dispositif mécanique (qui en général est le même que celui qui empêche le relâchement du freinage), on choisit de mesurer avec un capteur électrique l'évolution dans le temps de la position de la tige de commande de frein.

Le capteur de position peut être tout simplement un potentiomètre, tel que décrit dans le document US 5,350,225, dont un curseur est fixé à la tige de commande et qui frotte sur une résistance graduée. L'inconvénient présenté par ce type de capteur est le manque de fiabilité d'un tel potentiomètre, notamment son usure du fait des très nombreuses sollicitations de la pédale de frein dans un véhicule au cours de son utilisation. D'autres systèmes prévoient la mise en place de synchro-détecteurs (dits resolvers dans la littérature anglo-saxonne) qui présentent l'avantage d'éviter ce type de frottements qui conduisaient à la détérioration du capteur. Cependant ces capteurs par synchro-détection nécessitent une structure mécanique mobile et sont en eux-mêmes assez onéreux. Ils sont enfin trop encombrants et trop lourds pour pouvoir être montés dans des habitacles de plus en plus réduits de véhicules.

Il est également connu du document DE 195 10 522, un système de freinage électro-hydraulique, par conséquent ne comportant pas de servomoteur d'assistance au freinage, muni d'un capteur de position de la tige d'actionnement reliée à la pédale de frein, dont le fonctionnement est basé sur la détection de courants de Foucault. Cependant son application à un servomoteur n'est pas envisageable.

Dans l'invention, on a voulu remédier à ces problèmes des capteurs connus, mécaniques et électriques utilisés dans les servomoteurs d'assistance au freinage de manière connu, en les remplaçant par un autre capteur, lui aussi de type électrique mais dont le principe de détection est différent. Le capteur selon l'invention est un capteur à courants de Foucault. Selon l'invention, on munit un tunnel de passage de la tige de commande de frein d'une bobine d'excitation, et de mesure, ou bien d'une bobine d'excitation et d'une bobine de mesure. Avec la bobine d'excitation on provoque la création d'un champ magnétique alternatif (ou continu) à l'endroit de la tige de commande. Comme cette tige est métallique, elle est le siège de courant de Foucault qui retentissent dans l'impédance de la bobine de mesure. De préférence, dans ce cas, la tige présente un profil variable de sorte que les intensités des courants de Foucault dépendent des différentes parties de cette tige présentées à l'intérieur de la bobine d'excitation et donc en définitive de la position en enfoncement de cette tige de commande de frein.

Cependant, on a par ailleurs observé que ce genre de capteurs, malgré un fonctionnement de principe, est fortement perturbé par la présence de pièces ferromagnétiques accompagnant le mouvement au sein de la bobine d'excitation et ou de mesure. Or la tige de commande de freinage est en principe en acier, matériau notablement ferromagnétique. En outre, du fait des échauffements à l'intérieur de l'habitacle moteur, le comportement ferromagnétique de cette tige est lui-même sujet à modification. De sorte que la mesure à froid peut ne pas être suffisamment comparable a une mesure à chaud.

Dans ces conditions, à titre de perfectionnement, on prévoit alors de munir la tige de commande d'une enveloppe en un matériau conducteur mais non ferromagnétique. On montre alors que cette enveloppe qui masque la présence du matériau ferromagnétique pour l'induction d'excitation, est de nature à faire naître des courants de Foucault dans cette enveloppe elle-même. Par ailleurs le comportement de ce matériau conducteur non ferromagnétique n'est pas perturbé par la température. En retenant pour cette structure d'enveloppe une structure étagée, avec une variation monotone d'un bout à l'autre de la tige de commande, on obtient alors le résultat escompté.

La présente invention permet avantageusement de détecter la position de la tige de commande correspondant au début de la phase de saturation du servomoteur, et ainsi d'envoyer dans les freins à l'aide d'une pompe hydraulique une quantité de fluide hydraulique supplémentaire formant une assistance complémentaire au freinage.

L'invention a donc pour objet un servomoteur d'assistance de freinage comportant une tige de commande de freinage, un dispositif d'assistance de freinage actionné par la tige de commande, et un capteur de position de la tige de freinage, caractérisé en ce que le capteur est du type à courants de Foucault.

La présente invention a également pour objet un système de freinage comportant un servomoteur d'assistance pneumatique au freinage, un maître-cylindre recevant l'assistance dudit servomoteur et raccordé à des freins disposés au niveau de roues, un calculateur générant des ordres de commande à au moins une pompe hydraulique caractérisé en ce que ledit servomoteur est un servomoteur selon l'une quelconque des revendications précédentes, en ce que ledit calculateur reçoit des informations de position de la tige de commande actionnant ledit servomoteur de la part du capteur de position et en ce que pour une certaine position axiale de la tige de commande, ledit calculateur génère l'ordre à la pompe hydraulique d'envoyer une quantité de fluide hydraulique dans les freins.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue longitudinale arrachée d'une détail d'un système de freinage comportant un servomoteur selon la présente invention ;
- Figure 2 : une vue de détail du servomoteur selon la figure 1 ;
- Figures 3a et 3b : des représentations d'un perfectionnement de l'invention avec mise en place d'une enveloppe métallique non ferromagnétique autour de la tige.
- Figures 4 : un schéma d'un système de freinage selon la présente invention ;
- Figure 5 : une courbe d'assistance d'un servomoteur d'assistance au freinage de type connu.

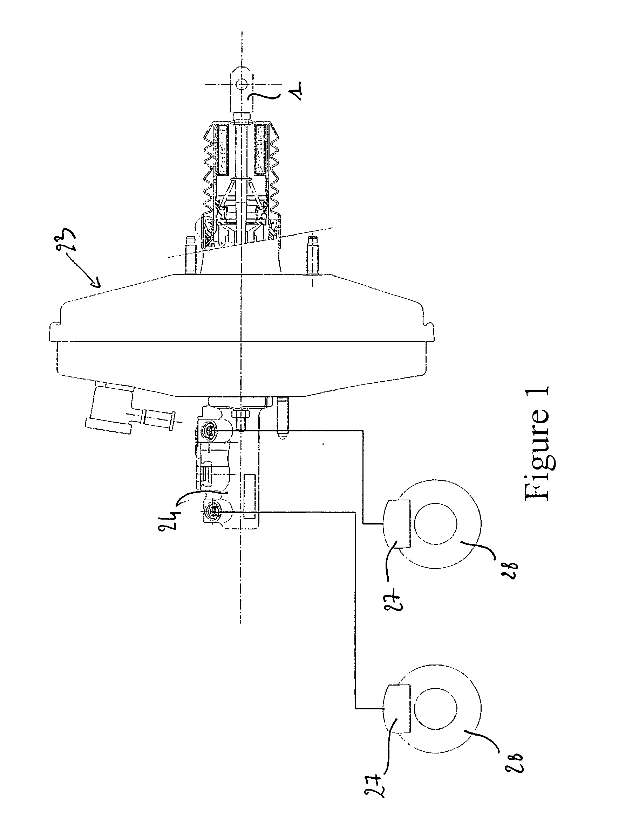

La Figure 1 montre un servomoteur 23 d'assistance de freinage selon l'invention comportant de manière connue une enveloppe 20 définissant un volume intérieur divisé en une première chambre à basse pression et une seconde chambre à pression variable (non représentées) séparées de manière étanche par une jupe (non représentée). Le servomoteur 23 comporte une valve trois voies (non représentée) de type connu actionnée par une tige 1 de commande de freinage. Cette tige 1 est reliée d'une part, côté droit de la figure 1, à une pédale de frein d'un véhicule (non représenté). L'assistance fournie par le servomoteur au moyen de la jupe se déplaçant sous un différentiel de pression entre les deux chambres est transmise à un maître-cylindre 24 par l'intermédiaire d'une tige de poussée (non représentée). Le maître-cylindre 24 est quant à lui raccordé à des freins 27 disposés au niveau de roues (28).

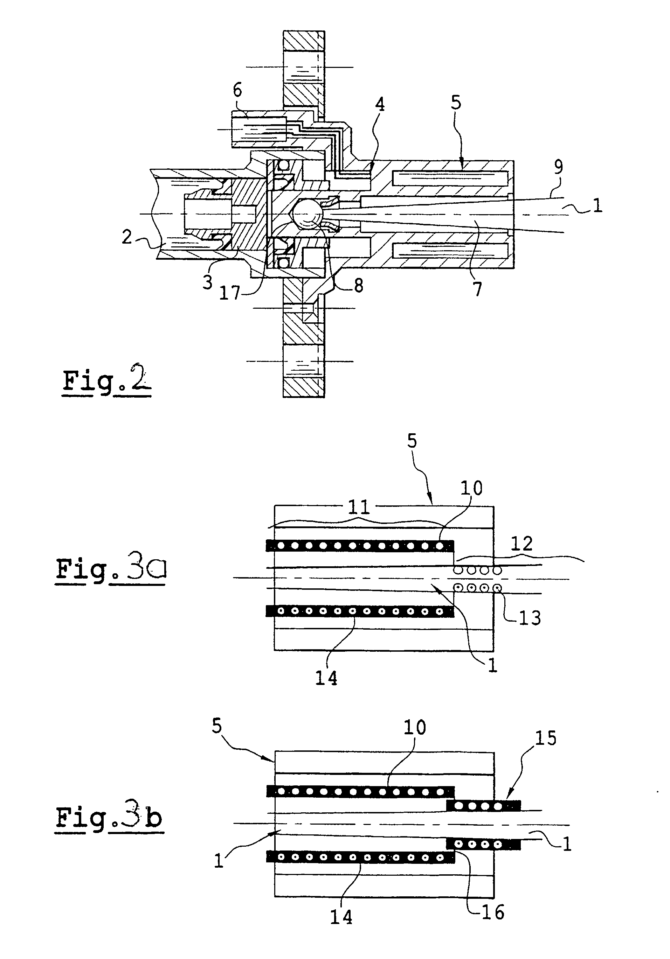

Le dispositif d'assistance de freinage 2 est actionné par la tige de commande 1 qui appuie sur ce dernier par son embase 3. Le servomoteur présenté figure 2 est complété par un capteur de position, notamment de position de la tige de freinage. Dans l'invention un capteur de position est un capteur à courant de Foucault. A titre d'exemple ce capteur à courant de Foucault comporte un circuit électrique de commande 4 et une bobine d'excitation et/ou de mesure 5. Le circuit de commande 4 est relié par un connecteur 6 à un dispositif d'alimentation électrique ainsi qu'à un dispositif de collecte et de traitement des mesures effectuées. Le signal électrique d'excitation de la bobine peut être un signal alternatif ou un signal continu. Une source électrique correspondante est connectée au connecteur 6 et produit un signal électrique d'alimentation.

Si le signal électrique d'alimentation est alternatif, la naissance des courants de Foucault est liée à la fréquence du signal d'excitation. Si ce signal est continu, l'induction à l'intérieur 7 de la bobine sera constante. Cependant, du fait que la tige 1 présente un profil continûment variable depuis sa base 8 jusqu'à sa tête 9, des courants de Foucault de types différents naîtront du seul fait de l'enfoncement de cette tige dans la bobine 5, et l'impédance de cette dernière sera modifiée en fonction de la position en enfoncement de cette tige 1.

Il est connu par ailleurs soit de mesurer la variation de tension, soit la variation de courant soit encore la variation d'impédance d'une bobine 5 unique ou, en cas de bobine d'excitation différente d'une bobine de mesure, de mesurer ces différentes grandeurs physiques dans une bobine de mesure voire dans un groupe de bobines de mesure. Dans l'exemple, une seule bobine 5 mixte est montrée. Dans l'invention une bobine d'excitation et de mesure représentera néanmoins un ensemble de bobines, organisées d'une manière quelconque, de manière à produire d'une part une induction magnétique à l'endroit de la pénétration de la tige ; et d'autre part de produire une mesure de la variation qui en résulte du fait de la présence des courants de Foucault.

Comme il a été indiqué ci-dessus, la nature en acier de la tige 1 est cependant sujette à des variations de comportement en fonction de la température d'une part, et d'une tige à une autre d'autre part. Ces problèmes pourraient être résolus par une calibration de l'instrument de mesure ainsi constitué Toutefois, plutôt que de supporter ces inconvénients, on préfère alors, figure 3a, munir la tige 1 d'une enveloppe 10 en un matériau conducteur et non ferromagnétique. Dans une version simplifiée, une seule enveloppe 10, sous la forme d'un cylindre circulaire en aluminium est passée autour d'une portion importante 11 de la tige 1. Une autre portion 12 de la tige 1 n'est pas enveloppée par un tel cylindre. Plusieurs solutions sont envisageables.

Soit l'enveloppe 10 elle-même présente un profil variable et auquel cas il devient possible de mesurer sa position et son avancée dans la bobine 5. En effet, les courants de Foucault dépendent du diamètre du conducteur ainsi interposé. Il suffit donc de faire évoluer le diamètre pour les faire varier, et donc modifier le comportement du capteur. Soit, solution plus facile à réaliser, l'enveloppe 10 est cylindrique circulaire, son profil ne varie pas mais dans ce cas on s'arrange pour qu'une partie de la portion 12 pénètre dans la bobine 5. Dans ce cas l'étagement de la structure présentée par le passage de l'enveloppe 10 de la tige 1 à l'endroit intermédiaire entre les portions 11 et 12 est de nature à modifier l'impédance de la bobine de mesure, et de permettre d'extraire un signal représentatif de la position en enfoncement de cette tige 1. On notera qu'une telle solution n'est pratique que si la perturbation provoquée par les courants de Foucault 13 dans la tige 1 (à comportement difficilement maîtrisable) sont peu importants par rapport aux courants de Foucault 14 développés dans l'enveloppe 10.

A titre de perfectionnement préféré, figure 3b, l'enveloppe 10 est associée à une autre enveloppe 15 enveloppant la tige 1 dans la portion 12. De préférence l'enveloppe 15 que celui de l'enveloppe 10, de diamètre légèrement plus faible, pénètre selon un recouvrement 16 à l'intérieur de l'enveloppe 10. On considérera par ailleurs que les deux cylindres enveloppes 10 et 15 sont partiellement emboîtés les uns dans les autres à partir du moment où les influences résultant de la naissance de courants de Foucault dans la tige 1 en acier sont annihilés.

De manière à effectuer la mesure de la position en enfoncement de la tige 1 le plus précisément possible, on s'arrange pour que les deux enveloppes 10 et 15 présentent entre elles des sections les plus différentes possibles. Dans le cas où ces enveloppes seraient des cylindres circulaires, leurs diamètres seront les plus différents possibles. Dans ce cas, l'enveloppe 10 sera de préférence fixée à la base 8 de la tige. La figure 1 montre à cet effet que l'enveloppe 10 est solidaire d'un culot 17 interposé entre l'embase 3 et la base 8 de la tige 1. Dans ce cas le culot 17 et l'enveloppe 10 forment le support du circuit 4 et de la bobine 5. Par opposition, l'enveloppe 15 sera fixée, par exemple par collage, de tout son long, ou par sertissage, sur la partie haute de la tige 1 aboutissant à la tête 9 de celle-ci. Ainsi une enveloppe est fixée à une partie basse de la tige alors que l'autre est fixée en partie haute.

Dans un exemple préféré, notamment propice à un bon sertissage, le matériau des enveloppes 10 et 15 est en aluminium. Ces enveloppes n'ont par ailleurs pas besoin d'être particulièrement épaisses. Dans un exemple, leurs épaisseurs sont de l'ordre de 0,5 mm. De telles épaisseurs sont suffisantes pour faire naître des courants de Foucault par effet de peau d'une part et pour être suffisamment rigide notamment pour l'enveloppe 10 afin de résister aux vibrations. Ces épaisseurs peuvent être réduites si par ailleurs la fréquence du signal alternatif d'excitation est augmentée.

En agissant ainsi on peut disposer en permanence d'un signal électrique représentatif de la position en enfoncement de l'accident représentatif de la variation étagée des deux enveloppes. Les mesures électriques étant très réactives (le signal de mesure révèle instantanément la position), on peut en repérant les différentes positions de la tige dans le temps en mesurer la vitesse d'enfoncement et notamment en déduire, en cas de besoin, qu'un signal est représentatif d'un freinage brusque, justifiant un mode d'assistance particulier comme indiqué ci-dessus. La solution présentée présente par ailleurs l'avantage d'être autotarable : il suffit de mesurer en permanence l'impédance provoquée par la position des deux enveloppes 10 et 15 alors que la pédale de frein n'est pas sollicitée pour connaître une valeur de départ de la mesure. Le tarage du capteur est ainsi grandement simplifié.

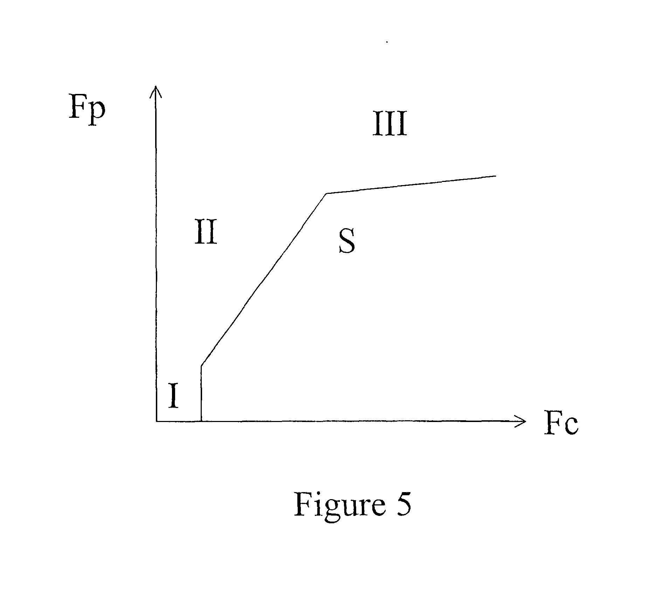

Un servomoteur d'assistance pneumatique au freinage est en partie caractérisé par son point de saturation (figure 5) correspondant à la situation où la chambre à pression variable est à la pression maximale possible, dans l'exemple représenté à la pression atmosphérique et également à une position axiale (P) déterminée de la tige de commande.

Dans cette situation, le servomoteur ne fournit plus d'assistance supplémentaire, et toute augmentation de force à la tige de poussée sera entièrement fournie par le conducteur.

Sur la figure 5, on peut voir la courbe d'assistance d'un servomoteur de type connu reliant la force Fp à la tige de poussée en fonction de la force Fc à la tige de commande. La courbe comporte une première zone dite de saut I correspondant au début de montée de la pression dans le maître-cylindre, une deuxième zone II d'assistance durant laquelle l'augmentation de la force à la tige de commande provoque une augmentation de la force de poussée égale à la somme de la force à la tige de commande et de l'assistance fournie par le servomoteur, et une troisième zone dite de saturation III durant laquelle toute force supplémentaire à la tige de commande correspond à une même augmentation de la force de poussée, la zone III débutant par le point de saturation S.

La présente invention permet avantageusement de déterminer le début S de la phase de saturation III qui correspond à une position déterminée P de la tige de commande et ainsi de permettre la fourniture d'une assistance complémentaire au freinage.

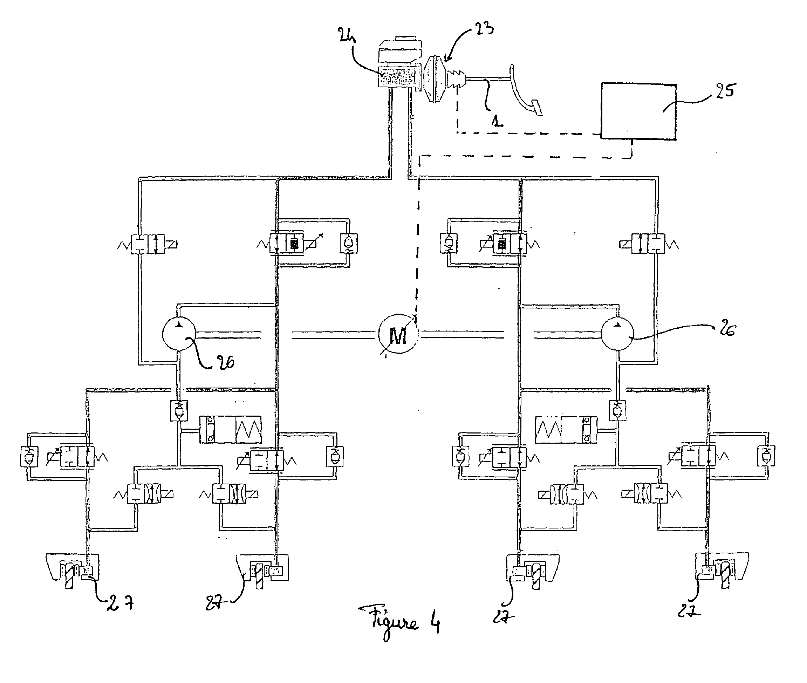

Sur la figure 4, on peut voir un schéma d'un système de freinage selon la présente invention comportant un servomoteur d'assistance 23 au freinage selon la présente invention, le maître-cylindre 24 recevant l'assistance du servomoteur, un calculateur 25 recevant des information du capteur de position 4-6 de la tige de commande 1, une pompe hydraulique 26 commandée par le calculateur 25, par exemple électrique, les freins 27 disposés au niveau des roues 28 et raccordées au maître-cylindre 24.

Nous allons maintenant décrire le fonctionnement du système de freinage selon la présente invention.

Lors d'une phase de freinage, dans la zone II le servomoteur 23 fournit une assistance proportionnelle à toute augmentation de la force appliquée sur la tige de commande 1 de la part du conducteur.

Lorsque la tige de commande atteint une position axiale déterminée P correspondant au début de la phase de saturation S, le servomoteur ne fournit plus d'assistance supplémentaire, le capteur de position 4-6 détecte cette position P de la tige de commande 1, le calculateur 25 ayant la valeur de la position P en mémoire repère le début de la phase de saturation et génère un ordre à la pompe hydraulique 26 d'envoyer une quantité supplémentaire de fluide hydraulique dans les freins, formant ainsi une assistance complémentaire.

Il est bien entendu que le fait que la tige de commande se déplace vers la droite ou la gauche de la figure est analysé par le calculateur 25 selon le signal correspondant à une partie déterminée de la tige de commande 1 et capté par le capteur de position. Ainsi le calculateur «sait » si le servomoteur est encore dans sa phase de saturation ou non.

## Revendications

1. Servomoteur d'assistance de freinage comportant une tige (1) de commande de freinage, un dispositif (2) d'assistance de freinage actionné par la tige de commande, et un capteur (4-6) de position de la tige de freinage, **caractérisé en ce que** le capteur est du type à courants de Foucault , **en ce que** le capteur comporte, monté sur le dispositif d'assistance, un circuit électrique (4) de commande et une bobine (5) d'excitation et/ou de mesure, et, solidaire de la tige de commande, une structure étagée (10, 15) de matériau conducteur et non ferromagnétique, et **en ce que** la structure étagée comporte des éléments cylindriques et enveloppant la tige.

2. Servomoteur selon la revendication 1, **caractérisé en ce que** la structure comporte deux cylindres de sections différentes.

3. Servomoteur selon l'une des revendications 1 ou 2, **caractérisé en ce que** la structure comporte deux cylindres emboîtés (16) partiellement les uns dans les autres.

4. Servomoteur selon l'une des revendications 1 à 3, **caractérisé en ce que** la structure comporte deux cylindres dont l'un est fixé à une partie basse (8) de la tige, et l'autre est fixé à une partie haute (9) de la tige

5. Servomoteur selon l'une des revendications 1 à 4, **caractérisé en ce que** le matériau est de l'aluminium.

6. Servomoteur selon l'une des revendications 1 à 5, **caractérisé en ce qu'**il comporte une source de courant alternatif pour alimenter la bobine (5) d'excitation.

## Claims

1. Brake booster comprising a brake control rod (1), a brake-boosting device (2) actuated by the control rod, and a position sensor (4-6) sensing the position of the brake rod, **characterized in that** the sensor is of the eddy current type, **in that** the sensor comprises, mounted on the booster device, an electric control circuit (4) and an excitation and/or measurement coil (5) and, secured to the control rod, a stepped structure (10, 15) made of conducting and non-ferromagnetic material, and **in that** the stepped structure comprises elements which are cylindrical and which envelope the rod.

2. Booster according to Claim 1, **characterized in that** the structure comprises two cylinders of different cross sections.

3. Booster according to one of Claims 1 or 2, **characterized in that** the structure comprises two cylinders partially nested (16) one inside the other.

4. Booster according to one of Claims 1 to 3, **characterized in that** the structure comprises two cylinders, one of which is fixed to a bottom part (8) of the rod, and the other of which is fixed to a top part (9) of the rod.

5. Booster according to one of Claims 1 to 4, **characterized in that** the material is aluminium.

6. Booster according to one of Claims 1 to 5, **characterized in that** it comprises an AC source for powering the excitation coil (5).

## Patentansprüche

1. Servomotor zur Bremsunterstützung, mit einer Stange (1) zur Bremssteuerung, einer Vorrichtung (2) zur Bremsunterstützung, die von der Steuerstange betätigt wird, und einem Sensor (4-6) zur Erfassung der Position der Bremsstange, **dadurch gekennzeichnet, dass** der Sensor vom Typ mit Foucaultschen Strömen ist, der Sensor eine auf der Unterstützungsvorrichtung angebrachte elektrische Steuerschaltung (4), eine Erreger- und/oder Messspule (5) und eine mit der Steuerstange fest verbundene gestufte Struktur (10, 15) aus leitendem und nicht ferromagnetischem Material aufweist und die gestufte Struktur zylindrische Elemente aufweist, die die Stange umgeben.

2. Servomotor nach Anspruch 1, **dadurch gekennzeichnet, dass** die Struktur zwei Zylinder mit unterschiedlichen Querschnitten aufweist.

3. Servomotor nach Anspruch 1 oder 2, **dadurch gekennzeichnet, dass** die Struktur zwei Zylinder (16) aufweist, die teilweise ineinandergesteckt sind.

4. Servomotor nach einem der Ansprüche 1 bis 3, **dadurch gekennzeichnet, dass** die Struktur zwei Zylinder aufweist, wobei ein Zylinder an einem unteren Abschnitt (8) der Stange und der andere Zylinder an einem oberen Abschnitt (9) der Stange befestigt ist.

5. Servomotor nach einem der Ansprüche 1 bis 4, **dadurch gekennzeichnet, dass** das Material Aluminium ist.

6. Servomotor nach einem der Ansprüche 1 bis 5, **dadurch gekennzeichnet, dass** er eine Wechselstromquelle zur Versorgung der Erregerspule (5) aufweist.
